(19) Europäisches Patentamt
European Patent Office
Office européen des brevets

(11) **EP 3 488 269 B1**

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **17739460.8**

(22) Anmeldetag: **14.06.2017**

(51) Internationale Patentklassifikation (IPC):
**G01V 3/10** *(2006.01)*      **G01V 3/15** *(2006.01)*
**G01V 13/00** *(2006.01)*

(52) Gemeinsame Patentklassifikation (CPC):
**G01V 3/15; G01V 3/104; G01V 13/00**

(86) Internationale Anmeldenummer:
**PCT/DE2017/000171**

(87) Internationale Veröffentlichungsnummer:
**WO 2018/014891 (25.01.2018 Gazette 2018/04)**

(54) **KALIBRIERUNGSVERFAHREN FÜR ELEKTROMAGNETISCHE INDUKTIONSMESSSYSTEME**

CALIBRATION METHOD FOR ELECTROMAGNETIC INDUCTION MEASUREMENT SYSTEMS

PROCÉDÉ D'ÉTALONNAGE POUR DES SYSTÈMES DE MESURE PAR INDUCTION ÉLECTROMAGNÉTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2016 DE 102016008841**

(43) Veröffentlichungstag der Anmeldung:
**29.05.2019 Patentblatt 2019/22**

(73) Patentinhaber: **Forschungszentrum Jülich GmbH 52425 Jülich (DE)**

(72) Erfinder:
• **TAN, Xihe
  52428 Jülich (DE)**
• **MESTER, Achim
  52399 Merzenich (DE)**
• **ZIMMERMANN, Egon
  52459 Inden/ Altdorf (DE)**
• **VAN DER KRUK, Jan
  6291 LR Vaals (NL)**

(56) Entgegenhaltungen:
**US-A1- 2015 177 412**

• **BURKE J. MINSLEY ET AL: "Multielevation calibration of frequency-domain electromagnetic data", GEOPHYSICS, Bd. 79, Nr. 5, 5. August 2014 (2014-08-05), Seiten E201-E216, XP055276096, US ISSN: 0016-8033, DOI: 10.1190/geo2013-0320.1**
• **SASAKI Y ET AL: "Resistivity and offset error estimations for the small-loop electromagnetic method", GEOPHYSICS, SOCIETY OF EXPLORATION GEOPHYSICISTS, US, Bd. 73, Nr. 3, 1. Mai 2008 (2008-05-01), Seiten F91-F95, XP001512277, ISSN: 0016-8033, DOI: 10.1190/1.2842044**
• **J M H Hendrickx ET AL: "Inversion of Soil Conductivity Profiles from Electromagnetic Induction Measurements: Theory and Experimental Verification", Soil Sci. Soc. Am. J., 1. Januar 2002 (2002-01-01), Seiten 673-685, XP055407946, Gefunden im Internet: URL:https://naldc.nal.usda.gov/naldc/download.xhtml?id=13029&content=PDF [gefunden am 2017-09-19]**

EP 3 488 269 B1

- Michael Killick: "An analysis of the relationship of apparent electrical conductivity to soil moisture in alluvial Recent Soils, lower North Island, New Zealand (thesis)", , 1. April 2013 (2013-04-01), Seiten FP-31,68-95, XP055407859, Palmerston North, New Zealand Gefunden im Internet: URL:https://mro.massey.ac.nz/bitstream/han dle/10179/4902/02_whole.pdf [gefunden am 2017-09-19]
- R Gebbers ET AL: "Depth sounding with the EM38-detection of soil layering by inversion of apparent electrical conductivity measurements", 6th European Conference on Precision Agriculture, Skiathos, Greece, 3-6 June, 2007, 3. Juni 2007 (2007-06-03), Seiten 1-9, XP055407906, Gefunden im Internet: URL:https://www.researchgate.net/profile/R obin_Gebbers/publication/277018715_Depth_s ounding_with_the_EM38-detection_of_soil_la yering_by_inversion_of_apparent_electrical _conductivity_measurements/links/555f37ed0 8ae8c0cab2fbc10/Depth-sounding-with-the-EM 38-detection-of-soil-layering-by-inversion -of-appare [gefunden am 2017-09-19]

## Beschreibung

Die Erfindung betrifft ein Kalibrierungsverfahren für elektromagnetische Induktionsmesssysteme (EMI-Systeme), welche beispielsweise zur Messung der scheinbaren elektrischen Leitfähigkeit von Böden eingesetzt werden.

Elektromagnetische Induktionsmethoden eignen sich zur kontaktlosen Messung der elektrischen Leitfähigkeit. In der Geophysik werden Geräte, die auf diesem Messprinzip beruhen, seit über 30 Jahren zur Charakterisierung von Böden eingesetzt. Die Geräteklasse, die speziell für die Untersuchung des oberflächennahen Bodens bis etwa 50 Meter Tiefe ausgelegt ist, wird in der Geophysik unter dem Namen "elektromagnetische Induktionssysteme", kurz EMI-Systeme, zusammengefasst.

Ein EMI Gerät beinhaltet typischer Weise eine Sendespule (Sender) und eine oder mehrere Empfängerspulen (Empfänger), die mit einem bestimmten Abstand zueinander angeordnet werden. Durch Anregen der Sendespule mit einem Wechselstrom im Frequenzbereich von typischerweise zwischen 100 Hz bis 100 kHz wird ein magnetisches Feld erzeugt, das im Folgenden als Primärfeld bezeichnet wird. Aufgrund der elektrischen Leitfähigkeit des Bodens werden durch das Primärfeld Induktionsströme hervorgerufen, welche wiederum ein magnetisches Feld, das sogenannte Sekundärfeld, hervorrufen. Das Sekundärfeld ist in der Regel einige Größenordnungen kleiner als das Primärfeld. Der Empfänger misst beide Felder zusammen. Gemäß der Näherung von McNeill (1980) ist das Verhältnis zwischen Sekundär- und Primärfeld proportional zur scheinbaren elektrischen Bodenleitfähigkeit (ECa), welche die Leitfähigkeit eines homogenen Bodens ist.

Um das Verhältnis von Sekundär- zu Primärsignal zu bestimmen und so auf die Leitfähigkeit zu schließen, muss das Primärsignal bestimmt werden. Mit Primärsignal wird das gemessene Signal bezeichnet, das durch das Primärfeld am Empfänger hervorgerufen wird. Im Zusammenhang mit der hier dargelegten Kalibriermethode wird die Bestimmung des Primärsignals und aller weiteren Messsignale, die nicht durch die Bodenleitfähigkeit beeinflusst werden, sondern beispielsweise durch Induktion im Sensorgehäuse oder in Kabeln usw., als Kalibrierung bezeichnet. Für eine ideale Kalibrierungsmessung müsste man eine Messung mit dem kompletten Systemaufbau, beispielsweise mit Messschlitten, Kabeln etc., unter exakt den bei der realen Messung vorliegenden Umgebungsbedingungen wie Temperatur, Luftfeuchte, elektromagnetische Felder etc., in unendlicher Entfernung zu anderen elektrisch leitenden Medien, wie etwa dem Boden, durchführen.

Verfügbare EMI-Systeme unterscheiden sich in ihren Kalibrierungsansätzen. Gängige Methoden sind die Verwendung einer "Referenztabelle" mit Daten von Vergleichsmessungen bei bekannten Bedingungen, wie sie in den Schriften US2003184301-A1; CA2424250-A1; US6710599-B2; CA2424250-C offenbart sind, die verwendet werden, um Kalibrierungswerte zu inter- bzw. extrapolieren, die den bei der Messung vorliegenden Umgebungsbedingungen, z.B. der Temperatur, entsprechen, oder die Durchführung einer "Feldkalibrierung" in Form einer Messung mit dem EMI-System in zwei Orientierungen, nämlich horizontale koplanare Spulen (HCP) und vertikale koplanare Spulen (VCP), am Untersuchungsort vor der Messkampagne, wie in der Schrift US 7759941 B2 beschrieben. In letzterem Fall werden für die unterschiedlichen Spulenausrichtungen unterschiedliche räumliche Empfindlichkeitsverteilungen erreicht. Aus der unterschiedlichen Tiefenabhängigkeit der Sensitivität des Messsystems kann das Sekundärfeld eines homogenen Bodens vorhergesagt werden.

Neben diesen beiden gerätespezifischen Methoden hat sich in den letzten Jahren eine dritte Methode etabliert, die auf Referenzdaten zur elektrischen Leitfähigkeit des Bodens am Beobachtungsort und -zeitpunkt basiert. Mit diesen Daten werden mittels elektromagnetischer Modelle EMI-Daten vorhergesagt, so dass die tatsächlich gemessenen EMI-Daten an modellierte Daten angepasst (kalibriert) werden können. Ein solcher Referenzdatensatz kann beispielsweise auf einem kleinen Teilstück des EMI-Untersuchungsgebiets mittels elektrischer Widerstandstomographie (Lavoue, F., J. van der Kruk, J.Rings, F. Andre, D. Moghadas, J.Huisman, S. Lambot, L. Weihermüller, J. van der Borght and H. Hereecken (2010). Electromagnetic induction calibration using apparent electrical conductivity modelling based on electrical resistivity tomography. Near Surf. Geophys. 8(6), 553-561.) aufgenommen werden.

Zusammenfassend wird eine Kalibrierung gewöhnlich unter Bedingungen durchgeführt, bei denen die Bodenleitfähigkeit bekannt ist oder indem zwei unterschiedliche EMI-Messungen mit dem gleichen Messsystem über dem gleichen Ort durchgeführt werden. Auf diese Weise wird mit geeigneten physikalischen Modellen die Kalibrierung bestimmt.

Die Verwendung einer Referenztabelle basiert auf Referenzmessungen, welche hinreichend umfangreich durchgeführt werden müssen um genaue Kalibrierungsdaten für alle möglichen Umgebungsbedingungen von Messkampagnen, wie Temperatur, Bodenleitfähigkeit, Alterungsprozesse des Messsystems, etc. zu beinhalten. Letztlich beinhaltet eine solche Kalibrierung keine Korrekturen für selbst-konstruierte Messschlitten, GPS-Module, etc., mit denen EMI-System mitunter verwendet werden müssen. Die beschriebene Methode zur Feldkalibrierung umgeht die meisten der gerade beschriebenen Nachteile, da die Kalibrierung unter den gleichen Bedingungen wie die Messung im Feld durchgeführt wird. Allerdings kann diese Kalibrierung nur für HCP- und VCP-Anordnungen verwendet werden, senkrechte Spulenanordnungen (PRP) können so nicht kalibriert werden. Des Weiteren wird typischer Weise kein Kalibrierungsapparat verwendet, der es ermöglicht, einen umfangreichen EMI-Aufbau, so wie er oft für quantitative Messungen (z.B.

mit einem Messschlitten) verwendet wird, zu kalibrieren. Außerdem kann die sehr unterschiedliche räumliche Empfindlichkeit der beiden Anordnungen (HCP und VCP) zur Messung von unterschiedlichen äußeren Störeinflüssen führen, welche dadurch Fehler in der Kalibrierung hervorrufen.

Die dritte Methode, die auf Referenzdaten zur elektrischen Leitfähigkeit des Bodens am Beobachtungsort und - zeitpunkt basiert, benötigt weitere Messgeräte und/oder Expertise um die elektrische Bodenleitfähigkeit unabhängig von den EMI-Messungen zu bestimmen. Daher ist dieser Ansatz gewöhnlich arbeitsaufwändig, teuer und/oder erfordert, dass zusätzliche Messgeräte zum Untersuchungsgebiet gebracht werden. Außerdem bringt eine alternative Messmethode das Risiko ein, dass geringfügig andere elektromagnetische Bodenparameter gemessen werden, beispielsweise durch andere Messfrequenzen, so dass das resultierende Bodenmodel sich von dem mittels EMI messbaren unterscheidet und so die Qualität der Kalibrierung begrenzt.

Die Veröffentlichung von Sasaki et al. "Resistivity and offset error estimations for the smallloop electromagnetic method" in Geophysics Vol. 73 Nr.3 S F91-F95 aus dem Jahre 2008 offenbart ein Verfahren zur Kalibrierung bei dem in zwei Höhen gemessen wird. Die Autoren beschreiben einen Algorithmus, der es ermöglicht sowohl ein Leitfähigkeitsmodell des Bodens, als auch einen Kalibrierungswert anhand von Messungen in zwei Höhen zu bestimmen. Die Autoren führten dazu die komplette Feldmessung zusätzlich in einer zweiten Messhöhe durch.

Die Veröffentlichung von Minsley et al. "Multielevation calibration of frequency-domain electromagnetic data" in Geophysics Vol. 79 Nr.5 S. E201-E216 aus dem Jahre 2014 offenbart ein Kalibrierverfahren für Messungen in großen Tiefen. Die Autoren beschreiben eine Methode die anhand von Messungen in verschiedenen Höhen sowohl ein zuvor unbekanntes Bodenmodel, als auch die unbekannten Kalibrationsfaktoren für das Messsystem bestimmt. Die Autoren zielen mit der Methode auf Messsysteme die in Höhen von 20 bis 60 Metern Höhe über dem Boden eingesetzt werden und nicht auf solche, die zur Untersuchung des Bodenbereichs in unmittelbarer Nähe zur Oberfläche verwendet werden.

Es ist daher die Aufgabe der Erfindung ein Kalibrierungsverfahren für elektromagnetische Induktionssysteme zur Verfügung zu stellen, welches schnell, einfach und sehr genau ist. Das Kalibrierungsverfahren soll geeignet sein Messungen durchzuführen, bei denen Messschlitten oder GPS-Module verwendet werden. Bei der Kalibrierung sollen alle Umgebungsparameter berücksichtigt werden, die Einfluss auf das Sekundärfeld nehmen. Die Kalibrierung soll räumliche Unterschiede in der Bodenleitfähigkeit, wie beispielswiese horizontale Bodenschichtungen, berücksichtigen. Das Verfahren soll für jedes EMI-Gerät und jede EMI-Anordnung geeignet sein. Kalibrierungsfehler sollen verhindert oder gemindert werden. Eine Kalibrierung senkrecht zueinander ausgerichteter Spulenanordnungen soll ermöglicht werden. Es soll eine selektive Messung der Magnetfelder ermöglicht werden, die nur aus Magnetfeldern des Bodens resultieren, die von dessen Leitfähigkeit resultieren. Es sollen auch PRP-Spulenanordnungen einer Kalibrierung zugänglich gemacht werden. Die Nachteile des Standes der Technik sollen überwunden werden.

Zur Lösung dieser Aufgabe stellt die vorliegende Erfindung ein Verfahren zur Kalibrierung für elektromagnetische Induktionsmesssysteme gemäß unabhängigem Anspruch 1 sowie ein Verfahren zur Kalibrierung für elektromagnetische Induktionsmesssysteme gemäß unabhängigem Anspruch 2 bereit.

Mit den erfindungsgemäßen Verfahren ist es nunmehr möglich, eine Kalibrierung schnell, einfach und genau durchzuführen, insbesondere wenn variable Umgebungsparameter vorliegen, wie beispielsweise vorhandene Messschlitten und die Verwendung von GPS-Modulen. Dabei werden alle Umgebungsparameter berücksichtigt, die Einfluss auf das Sekundärfeld nehmen. Die Kalibrierung berücksichtigt räumliche Unterschiede in der Bodenleitfähigkeit, wie beispielswiese horizontale Bodenschichtungen. Das Verfahren ist für jedes EMI-Gerät und jede EMI-Anordnung geeignet. Kalibrierungsfehler werden verhindert oder gemindert. Eine Kalibrierung senkrecht zueinander ausgerichteter Spulenanordnungen wird ermöglicht. Es wird eine selektive Messung der Magnetfelder ermöglicht, die nur aus Magnetfeldern des Bodens resultieren, die von dessen Leitfähigkeit resultieren. Es kann auch eine Kalibrierung von PRP-Spulen durchgeführt werden. Die Nachteile des Standes der Technik werden überwunden.

Vorteilhafte Ausgestaltungen der Erfindung sind in den Unteransprüchen angegeben.

Im Folgenden wird die Erfindung in ihrer allgemeinen Form beschrieben.

Das erfindungsgemäße Verfahren und die Vorrichtung sind geeignet Messungen in Tiefen von bis zu 50 m vorzunehmen. Insbesondere können Messungen der Bodenleitfähigkeit in Bodentiefen, die kleiner sind als 10 m, 5 m und insbesondere in Tiefen zwischen 0 m und 2 m, kalibriert werden.

Für die Anwendung des erfindungsgemäßen Verfahrens sind nur wenige lateral zueinander angeordnete Messorte erforderlich. Insbesondere reicht es in den meisten Fällen aus, nur an einem Messort eine Kalibrierung vorzunehmen. Die so erfolgte erfindungsgemäße Kalibrierung ermöglicht eine Messung an benachbarten Orten.

Erfindungsgemäß wird ein EMI-Messgerät in mindestens zwei Höhen gegenüber dem zu vermessenden Boden positioniert.

Ein geeignetes EMI-Messgerät, das auch als Induktionsmesssystem bezeichnet werden kann, kann unterschiedlich ausgestaltet sein. Es muss mindestens einen Sender und mindestens einen Empfänger besitzen. Der Sender kann eine Sendespule sein. Der Empfänger kann eine Empfangsspule, ein Magnetfeldsensor oder ein anderes Mittel zum Messen eines Magnetfeldes sein. In einer Ausführungsform kann das EMI-Messgerät einen einzigen Empfänger haben. Die Zahl der Sende- und Empfangsspulen bzw. Sender und Empfänger ist aber nicht beschränkt. In verschiedenen Ausführungsformen können 2, 3, 4, 5 oder mehr, beispielsweise 10, 20 oder 30 Sendespulen bzw. Sender vorhanden sein, je nach den Erfordernissen oder Umständen, die berücksichtigt werden sollen. Genauso können 2, 3, 4, 5, 6, 7, 8 oder mehr Empfänger, beispielsweise bis zu 250 Empfangsspulen vorhanden sein. Die Zahl der möglichen Empfänger ist grundsätzlich nicht begrenzt, sondern orientiert sich ebenfalls an den Wünschen der Experimentatoren oder den experimentellen Erfordernissen.

Dabei können alle möglichen Anordnungen von Sendern und Empfängern verwirklicht sein. So können HCP-Anordnungen, VCP-Anordnungen aber auch insbesondere PRP-Anordnungen eingesetzt werden. Die Sender und Empfänger können auch in einem beliebigen Winkel zueinander gedreht angeordnet sein. Das gilt sowohl für die Sender und Empfänger untereinander als auch im Verhältnis zwischen Sendern oder Empfängern. Grundsätzlich ist jede Sender-/Empfängeranordnung denkbar.

Bei der Durchführung des Verfahrens sendet der oder senden die Sender ein magnetisches Feld aus, welches im Boden und ggf. in der Umgebung einen Strom auslöst, der ein sekundäres Magnetfeld erzeugt, welches mit dem Empfänger oder den Empfängern gemessen wird. Erfindungsgemäß werden vom zu vermessenden Boden aus gesehen in verschiedenen Höhen Messwerte von dem Empfänger oder von den Empfängern aufgenommen. Dabei müssen die sekundären Magnetfelder in mindestens zwei Höhen gegenüber dem Boden gemessen werden.

Es können mehrere Messwerte in verschiedenen Höhen aufgenommen werden, beispielsweise 2, 3, 4, 5, .....20 Messwerte.

Die Messwerte können in m vorzugsweise äquidistanten Höhen aufgenommen werden, beispielsweise in Abständen von 10 cm, 20 cm oder 30 cm.

Erfindungsgemäß werden über eine Höhe von insgesamt zwei Metern zehn Messungen im Abstand von jeweils 20 cm oder 20 Messungen im Abstand von 10 cm durchgeführt.

Die Messwerte führen zu Werten der gemessenen scheinbaren elektrischen Leitfähigkeit des Bodens. Bei der scheinbaren Leitfähigkeit des Bodens handelt es sich um den effektiven Wert der Leitfähigkeit, die gemessen wird, und der sich aus unterschiedlichen Leitfähigkeiten des Bodens in verschiedenen Schichttiefen und in Abhängigkeit der räumlichen Sensitivität des Messsystems zusammensetzt.

Für das erfindungsgemäße Kalibrierverfahren wird ein Eingangsvektor betrachtet, der sich aus einer Reihe von elektrischen Leitfähigkeiten des Bodens in verschiedenen Bodenbereichen und erfindungsgemäß einem Kalibrierwert pro Sender-Empfänger-Pärchen CV zusammensetzt. Ein Sender-Empfänger-Pärchen ergibt sich für jede mögliche Kombination aus Sendern und Empfängern. Beispielsweise ergeben sich für einen Sender (Tx1) und zwei Empfänger (Rx1, Rx2) zwei Sender-Empfänger-Pärchen (Tx1-Rx1 und Tx1-Rx2). Die mögliche Anzahl der Sender-Empfänger-Pärchen ist dabei bei n Sendern und m Empfängern gleich dem Produkt aus n und m. Beim ersten Eingangsvektor handelt es sich um einen Vektor, der auf Erfahrungswerten basiert und als Annahme in die Berechnung eingeführt wird. Für einen näherungsweise horizontal geschichteten Boden beinhaltet der Eingangsvektor X einen Eingangsdatensatz, der eine Kombination aus Bodeneigenschaften und Systemeigenschaften beinhaltet. Damit kann man die erfindungsgemäße Kalibrierung auch für komplexere Böden, beispielsweise mit zweidimensionaler oder dreidimensionaler Leitfähigkeitsverteilung verwenden und die Genauigkeit der Kalibrierung kann erhöht werden. Der Eingangsvektor X beinhaltet im Fall eines horizontal geschichteten Bodens und eines einzigen Empfängers einen Datensatz aus n Leitfähigkeitswerten von n Schichten des zu vermessenden Bodens und eines Kalibrierwertes.

$$X = \begin{pmatrix} EC_1 \\ EC_2 \\ \vdots \\ EC_n \\ CV_1 \end{pmatrix} \quad \text{(Formel 1)}$$

Mit $EC_{1\text{-}n}$ = Leifähigkeitswert der jeweiligen Schicht und
$CV_1$ = erfindungsgemäßer Kalibierwert des Sender-Empfänger-Pärchens.

Bei Vorliegen mehrerer Sender-Empfänger-Kombinationen (p), also von mindestens zwei Empfängern oder mindestens zwei Sendern beinhaltet der Eingangsvektor im Fall eines horizontal geschichteten Bodens einen Datensatz aus n Leitfähigkeitswerten von n Schichten des zu vermessenden Bodens und mindestens zwei Kalibrierwerte, wobei die Anzahl der Kalibrierwerte gleich der Anzahl der Sender-Empfänger-Pärchen ist.

$$X = \begin{pmatrix} EC_1 \\ EC_2 \\ \vdots \\ EC_n \\ CV_1 \\ CV_2 \\ \vdots \\ CV_p \end{pmatrix} \qquad \text{(Formel 1a)}$$

Mit $EC_{1-n}$ = Leitfähigkeitswert der jeweiligen Schicht und
$CV_{1-p}$= erfindungsgemäßer Kalibrierwert des jeweiligen Sender-Empfänger-Pärchens.

Für den Fall einer dreidimensionalen Bodenleitfähigkeitsverteilung wird das Verfahren genauso angewendet.
Als Startwert wird ein Eingangsvektor $X_0$ verwendet, der sich aus der elektrischen Leitfähigkeiten $EC_{0,1}$, $EC_{0,2}$, $EC_{0,3}$, ....$EC_{0,n}$ für n Schichten und einem Kalibrierwert $CV_{0,1}$ zusammensetzt.

$$X_0 = \begin{pmatrix} EC_{0,1} \\ EC_{0,2} \\ \vdots \\ EC_{0,n} \\ CV_{0,1} \end{pmatrix} \qquad \text{(Formel 2)}$$

Bei Vorliegen mehrerer Sender-Empfänger-Kombinationen (p), also von mindestens zwei Empfängern oder mindestens zwei Sendern, beinhaltet der Startwert im Fall eines horizontal geschichteten Bodens einen Datensatz aus n Leitfähigkeitswerten von n Schichten des zu vermessenden Bodens und mindestens zwei Kalibrierwerte, wobei die Anzahl der Kalibrierwerte gleich der Anzahl der Sender-Empfänger-Pärchen ist.
Für mehrere Sender-Empfänger-Kombinationen (p) wird als Startwert ein Eingangsvektor $X_0$ verwendet, der sich aus den elektrischen Leitfähigkeiten $EC_{0,1}$, $EC_{0,2}$, $EC_{0,3}$, ....$EC_{0,n}$ für n Schichten und den Kalibrierwerten $CV_{0,\,1-p}$ zusammensetzt.

$$X_0 = \begin{pmatrix} EC_{0,1} \\ EC_{0,2} \\ \vdots \\ EC_{0,n} \\ CV_{0,1} \\ CV_{0,2} \\ \vdots \\ CV_{0,p} \end{pmatrix} \qquad \text{(Formel 2a)}$$

$X_0$ ist dabei der Ausgangswert für das erfindungsgemäße Verfahren, mit dem die Kalibrierwerte bestimmt werden sollen. Die Startwerte $EC_{0,1}$, $EC_{0,2}$, ..... $EC_{0,n}$, $CV_{0,1}$ $CV_{0,2}$ ...$CV_{0,p}$ sind Annahmen. Möglich sind feste Startwerte, wie beispielsweise 0,01 S/m für alle $EC_{01-n}$-Werte und 0,005 S/m für alle $CV_{0,1-p}$.
Dabei ist die Dicke der einzelnen Schichten vorgegeben. Beispielsweise wird der Boden bis zu einer Tiefe von 7 Metern in n Schichten mit gleicher Dicke unterteilt oder die Schichtdicke wird mit zunehmender Tiefe vergrößert.
Erfindungsgemäß werden die scheinbaren elektrischen Leitfähigkeiten ECa(h) von verschiedenen Messhöhen h für m Messhöhen [$h_1$, $h_2$, $h_3$, ....$h_m$] mittels eines Vorwärtsmodells berechnet. Dabei ist der erfindungsgemäße Kalibrierwert CV konstant für alle Höhen.
Für das Vorwärtsmodell ergibt sich daher für ein System mit einem Sender-Empfänger-Pärchen in der Messhöhe h

$$f\,(X_0,\,h) = ECa_{0,mod}(EC_{0,1}.....EC_{0,n},\,h) + CV_{0,1} \qquad \text{(Formel 3)}$$

als Ausgangswert für die Funktion nach Formel (3). Der Index $_{mod}$ bedeutet, dass die ECa-Daten modelliert werden.

Für das Vorwärtsmodell ergibt sich daher für ein System mit mehreren Sender-Empfänger-Pärchen (p), also mindestens zwei Sender-Empfänger-Pärchen

$$f(X_0, h) = \begin{pmatrix} ECa_{0,mod,1}(EC_{0,1} \; ... \; EC_{0,n}\,, h) \\ ECa_{0,mod,2}(EC_{0,1} \; ... \; EC_{0,n}\,, h) \\ \vdots \\ ECa_{0,mod,p}(EC_{0,1} \; ... \; EC_{0,n}\,, h) \end{pmatrix} + \begin{pmatrix} CV_{0,1} \\ CV_{0,2} \\ \vdots \\ CV_{0,p} \end{pmatrix} \text{(Formel 3a)}.$$

Als Vorwärtsmodell kann jedes bekannte Vorwärtsmodell eingesetzt werden. Beispielsweise kann als eindimensionales Vorwärtsmodell das LIN-Modell für kleine Induktionszahlen (aus dem Englischen von "low induction number") von McNeill, J.D., 1980 Electroagnetic terrain conductivity measurement at low induction numbers. Tech note TN-6, Geonics Ltd. oder das FS-Modell (aus dem Englischen von "full solution"), von Ward und Homann 1988, Kap 3, (Electromagnetic Theory for Geophysical Applications), in: Electromagnetic Methods in Applied Geophysics - Theory, investigations in Geophysics. Society of Exploration Geophysicists, Tulsa verwendet werden. Besonders geeignet ist das FS-Modell, da gerade die korrekte Berücksichtigung der Höhe des Gerätes über dem Boden wichtig für die Inversion des Kalibrierwertes bzw. der Kalibrierwerte ist.

Zur Berechnung der scheinbaren elektrischen Leitfähigkeit, bzw. der primären und sekundären Magnetfeldstärke ($H_P$ bzw. $H_S$), können Vorwärtsmodelle verwendet werden, welche auf der vollständigen Lösung der elektromagnetischen Gleichungen beruhen und beispielsweise von Ward und Hohmann (1988) beschrieben werden. Eine einfache Näherung für den Zusammenhang der Messsignale mit der scheinbaren Leitfähigkeit eines homogenen Bodens ist (McNeill, 1980):

$$ECa = \frac{4}{\mu_0 \omega \rho^2} \, Im\left(\frac{H_s}{H_p}\right), \qquad\qquad (4)$$

Wobei $H_P$ die primäre Magnetfeldstärke, $H_S$ die sekundäre Magnetfeldstärke, $\mu_0$ die magnetische Vakuumpermeabilität, $\rho$ der Sender-Empfänger-Abstand und $\omega$ die Messfrequenz bezeichnet.

Erfindungsgemäß werden geschätzte Startwerte $X_0$ über einen Inversionsansatz schrittweise optimiert indem der Unterschied zwischen modellierten Werten und gemessenen Werten minimiert wird. Als Formel für die Minimierung kann Formel 5 verwendet werden.

$$\min\{f(X,h) - ECa_{mea}(h)\} \qquad\qquad \text{(Formel 5)}$$

Dabei bedeutet der Index $_{mea}$, dass ECa-Daten gemessen werden.

Im Allgemeinen wird bei diesem Ansatz ein für Modelldaten ($X_i$) und Messhöhen h modellierter Messwert f(X,h) mit tatsächlichen Messwerten verglichen. Der Index i gibt die zugehörige Anzahl an Inversionsschritten an, die schrittweise zu den Modelldaten $X_i$ geführt hat. Aufgrund der Abweichung von gemessenen und berechneten Daten wird mittels geeigneter Algorithmen eine Veränderung der Modelldaten für eine neue Berechnung ($X_i$+1) vorgenommen und das Ergebnis erneut mit den gemessenen Daten verglichen. Dieser Prozess wird so lange fortgeführt, bis die Abweichung nicht mehr kleiner wird bzw. vom Anwender vorgegebene Abbruchbedingungen, wie beispielsweise die Anzahl an Berechnungsschritten, Abweichung, Änderung der Abweichung oder Ähnliches, erfüllt ist. Dafür können verschiedene Inversionsverfahren eingesetzt werden. Beispielhaft kann das Verfahren nach Gauß-Newton genannt werden.

Formel 5 ist die zu minimierende Funktion, bei der $ECa_{mea}(h)$ die gemessenen Daten von unterschiedlichen Messhöhen h sind. Die Anzahl der benötigten Messungen hängt von der Komplexität des Bodens ab. Um n Bodenleitfähigkeiten in verschiedenen Tiefen zu bestimmen müssen mindestens n Messungen in verschiedenen Höhen durchgeführt werden. Je mehr unterschiedliche Messungen durchgeführt werden umso zuverlässiger funktioniert das erfindungsgemäße numerische Verfahren. Die mindestens zwei Messungen hängen mit der Anzahl an Unbekannten im Eingangsvektor X und dem Informationsgehalt der Messungen zusammen. Im einfachsten Fall eines linearen Zusammenhangs zwischen Messungen und Unbekannten braucht man genauso viele Messungen wie es Unbekannte gibt. Für einen homogenen Boden wäre das ein EC und zusätzlich ein CV.

Die Verwendung mehrerer (p) Sender-Empfänger-Kombinationen bedeutet im erfindungsgemäßen Verfahren, die Erweiterung von CV zu $CV_1$, $CV_2$,...$CV_p$ Kalibrierungskonstanten. Die gleichzeitige Kalibrierung mehrerer Sender-Empfänger-Pärchen erleichtert die numerische Berechnung, da pro Pärchen und Messhöhe ein Kalibrierwert und eine Messung hinzukommt, die Anzahl der zu bestimmenden Bodeneigenschaften EC aber gleichbleibt.

Vorteilhaft kann eine Regularisierungsmatrix L in diese Zielfunktion eingefügt werden, die hier in Formel 6 enthalten ist.

$$\min\{\|f(X,h)\text{-}ECa_{mea}(h)\|_2 + \|L \cdot x\|_2\} \qquad \text{(Formel 6)}$$

Wenn das Gleichungssystem nach Formel 5 schlecht konditioniert ist, was häufig der Fall ist, dann wird bei dem Gauß-Newton-Verfahren eine Regularisierung (L), wie beispielhaft in Formel 6 beschrieben, benötigt um die Gleichung zu lösen.

Weitere Strategien, die zur Lösung von Formel 5 eingesetzt werden können, sind beispielsweise das Simplex-Verfahren oder stochastische Verfahren, wie "shuffled complex evolution", SCE.

Über eine Inversion werden die mit dem Vorwärtsmodell für die Modelldaten (Eingangsvektor X) berechneten scheinbaren Leitfähigkeiten mit den gemessenen scheinbaren Leitfähigkeiten verglichen und in mindestens einem Iterationsschritt optimiert. Dazu werden die Modelldaten variiert und mindestens eine weitere Rechnung mit einem Vorwärtsmodell durchgeführt. Über einen erneuten Vergleich der modellierten ECa-Werte mit den gemessenen ECa-Werten wird bewertet, ob die veränderten Modelldaten X die Messwerte besser beschreiben und ob weitere Inversionsschritte durchgeführt werden. Der Eingangsvektor ergibt sich nach Formel 1 mit den Werten $EC_1$, $EC_2$, $EC_3$, ....$EC_n$, $CV_1$. Dabei können auch unterschiedliche Inversionsverfahren verwendet werden.

In verschiedenen Iterationsschritten können sowohl verschiedene Vorwärtsmodelle als auch unterschiedliche Inversionsverfahren verwendet werden.

Nach mehreren Iterationsschritten, beispielsweise 500, 1000, 5000 oder 10000, erreicht die Zielfunktion ein Minimum und die zugehörigen Eingangswerte X beschreiben das am besten zu den Messdaten passende Bodenmodell und die Kalibrierung für das eingesetzt EMI-Gerät. Die Anzahl der Iterationsschritte (i) hängt von der Komplexität des Problems und der damit verbundenen Rechenzeit ab. Für komplexe Modelle kann ein kleinerer Wert von beispielsweise 20 praktikabler sein.

Das erfindungsgemäße Verfahren kann mit einer geeigneten Vorrichtung betrieben werden. Dazu ist ein EMI-Messgerät, welches mindestens einen Sender und mindestens einen Empfänger besitzt an ein Stativ angebracht, welches Mittel zur Höheneinstellung des EMI-Messgeräts in Form von Hebe- und/oder Senkmitteln besitzt.

Die Figur zeigt beispielhaft eine für die Durchführung des erfindungsgemäßen Verfahrens geeignete Vorrichtung.

Es zeigt:

Fig. 1: Eine geeignete Vorrichtung.

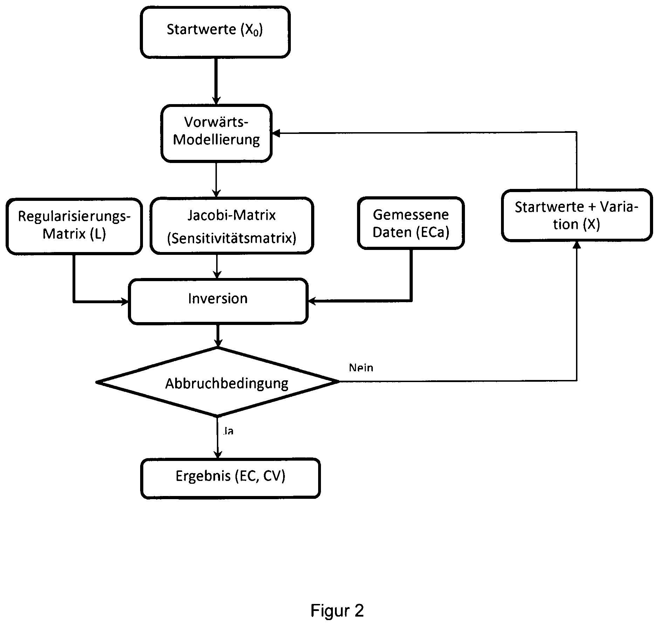

Fig. 2: Ein Flussdiagramm für das erfindungsgemäße Verfahren.

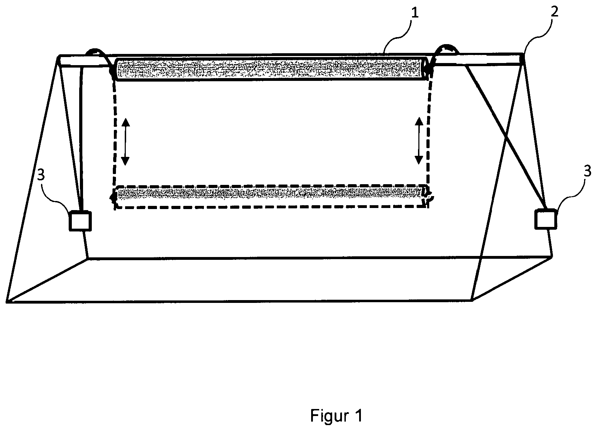

Figur 1 zeigt eine für die Durchführung des Verfahrens geeignete Vorrichtung. Sie beinhaltet ein EMI-Messgerät 1, welches an ein Stativ 2 angebracht ist, welches eine Höheneinstellung 3 besitzt, mit der das EMI-Messgerät bezüglich des Bodens in der Höhe verstellt werden kann.

Das erfindungsgemäße Verfahren beinhaltet die Kalibrierung von elektromagnetischen Induktionsmessgeräten (EMI-Geräte) hinsichtlich quantitativer scheinbarer Leitfähigkeitsmessungen mittels EMI-Messungen in vielen unterschiedlichen Messhöhen über dem Boden. Die Kalibrierung wird basierend auf den Messdaten in Verbindung mit einem elektromagnetischen Modell der Induktionsvorgänge im Boden numerisch berechnet.

Die räumliche Sensitivitätsverteilung des Messgerätes ändert sich näherungsweise nicht für unterschiedliche Messhöhen sondern ist relativ zum Messgerät konstant. Folglich ändert sich die Sensitivität für bestimmte räumliche Bereiche des Bodens während der Kalibrierungsmessungen in unterschiedlichen Messhöhen. Aus diesen unterschiedlichen Messsignalen für denselben Boden lässt sich ein vereinfachtes Bodenmodel anhand von elektromagnetischen Modellen in Verbindung mit einem Inversionsalgorithmus bestimmen (Hendrickx, J. M. H. B. Borchers, D. L. Corwin, S. M. Lesch, A. C. Hilgendorf, and J. Schlue (2002). Inversion of soil conductivity profiles from electromagnetic induction measurements: Theory and experimental verification. Soil Sci. Soc. Am. J. 66(3), 673-685.). Zusätzlich zu den Leitfähigkeiten des Bodens lässt sich außerdem eine systematische Leitfähigkeitsabweichung des Messsystems feststellen und korrigieren (Kalibrierung). Diese systematische Korrektur beinhaltet auch alle Störungen, die beispielweise durch den Messaufbau und das Messsystem hervorgerufen werden, solange diese Störquellen während der Kalibrierung und der Messung relative zum Messsystem fixiert sind. Um die Umgebungsbedingungen so gut wie möglich in die Kalibrierung mit einzubeziehen sollte die Kalibrierung mindestens einmal direkt vor oder nach der Messung durchgeführt werden. Um die Kalibration durchzuführen werden Messungen in unterschiedlichen Messhöhen mit allen EMI-Anordnungen (Sender-Empfänger-Kombinationen) durchgeführt. Mittels eines Inversionsalgorithmus wird die Kalibrierung für jede Anordnung berechnet. Die Korrektur wird im Rahmen der digitalen Datenprozessierung auf die EMI-Daten angewendet.

**Patentansprüche**

1.  Verfahren zur Kalibrierung für elektromagnetische Induktionsmesssysteme,

    bei dem ein elektrisches Induktionsmesssystem mit mindestens einem Sender, welcher ein magnetisches Feld als Primärsignal aussendet, welches im Boden einen Strom auslöst, der ein Sekundärsignal generiert, und einem Empfänger, der das magnetische Sekundärsignal registriert, in mindestens zwei Messhöhen gegenüber einem zu vermessenden Boden positioniert wird, wobei ein Eingangsvektor nach Formel 1,

    $$X = \begin{pmatrix} EC_1 \\ EC_2 \\ \vdots \\ EC_n \\ CV_1 \end{pmatrix} \qquad \text{(Formel 1)}$$

    mit
    $EC_{1\text{-}n}$ = Leitfähigkeitswert der jeweiligen Schicht und
    $CV_1$ = Kalibrierwert des Sender-Empfänger Pärchens
    der eine Kombination aus Bodeneigenschaften und Umgebungseigenschaften, welche die Eigenschaften des Induktionsmesssystems enthalten, darstellt und einen Datensatz aus n Leitfähigkeitswerten von n Schichten beinhaltet, wobei n die jeweilige Schicht bezeichnet, erstellt wird, und der als Ausgangswert für die Bestimmung der Kalibrierwerte einen Anfangswert $X_0$ nach Formel 2

    $$X_0 = \begin{pmatrix} EC_{0,1} \\ EC_{0,2} \\ \vdots \\ EC_{0,n} \\ CV_{0,1} \end{pmatrix} \qquad \text{(Formel 2)}$$

    mit
    $EC_{0,1} \dots EC_{0,n}$ = die elektrische Leitfähigkeit für n Schichten und
    $CV_{0,1}$ = Kalibrierwert
    verwendet, bei dem $EC_{0,1}$, $EC_{0,2}$, $EC_{0,3}$, ....$EC_{0,n}$ und $CV_{0,1}$ Annahmen sind und als Annahme scheinbare elektrische Leitfähigkeiten $ECa_{mod}$ (h) für m Messhöhen h [$h_1$, $h_2$, $h_3$, ....$h_m$] mittels eines Vorwärtsmodells berechnet werden, wobei $CV_{0,1}$ für alle Messhöhen konstant ist, woraus sich ein Vorwärtsmodell nach Formel 3

    $$f(X_0, h) = ECa_{0,mod}(EC_{0,1}\dots EC_{0,n}, h) + CV_{0,1} \qquad \text{(Formel 3)}$$

    mit f($X_0$. h) = Funktion von Anfangswert $X_0$ zur Höhe h und
    $ECa_{0,mod}$ = modellierte $ECa_0$ - Daten
    ergibt, und der geschätzte Startwert $X_0$ über einen Inversionsansatz iterativ optimiert wird, in dem der Unterschied zwischen modellierten $ECa_{mod}$ und gemessenen Werten minimiert wird,
    bei dem über eine Höhe von insgesamt zwei Metern zehn Messungen im Abstand von 20 cm oder 20 Messungen im Abstand von 10 cm durchgeführt werden, und ein Inversionsverfahren zur Minimierung nach Formel 5

    $$\min\{f(X,h) - ECa_{mea}(h)\} \qquad \text{(Formel 5)}$$

    mit
    f(X,h) = modellierter Messwert und
    $ECa_{mea}$ (h) = gemessene Daten von unterschiedlichen Messhöhen

verwendet wird, wobei zur Lösung der Gleichung nach Formel 5 ein Simplex-Verfahren oder ein stochastisches Verfahren eingesetzt wird.

2. Verfahren zur Kalibrierung für elektromagnetische Induktionssysteme, mit mindestens

einem Sender, welcher ein magnetisches Feld als Primärsignal aussendet, welches im Boden einen Strom auslöst, der ein Sekundärsignal generiert, und mindestens einem Empfänger, der das magnetische Sekundärsignal registriert, in mindestens zwei Messhöhen gegenüber einem zu vermessenden Boden positioniert wird, bei dem über eine Höhe von insgesamt zwei Metern zehn Messungen im Abstand von 20 cm oder 20 Messungen im Abstand von 10 cm durchgeführt werden, und ein elektromagnetisches Induktionsmesssystem verwendet wird, welches mehrere Sender-Empfänger-Pärchen, p, also mindestens einen Sender und zwei Empfänger oder mindestens zwei Sender ein einen Empfänger besitzt, wobei der Eingangsvektor nach Formel 1a verwendet wird

$$X = \begin{pmatrix} EC_1 \\ EC_2 \\ \vdots \\ EC_n \\ CV_1 \\ CV_2 \\ \vdots \\ CV_p \end{pmatrix} \qquad \text{(Formel 1a)}$$

mit
$EC_1 \dots EC_n$ = Leitfähigkeit der jeweiligen Schicht und
$CV_1 \dots CV_p$ = Kalibrierwert des jeweiligen Sender-Empfänger Pärchens,
wobei für mehrere Sender-Empfänger-Kombinationen, p, als Startwert ein Eingangsvektor $X_0$ nach Formel 2a verwendet wird,

$$X_0 = \begin{pmatrix} EC_{0,1} \\ EC_{0,2} \\ \vdots \\ EC_{0,n} \\ CV_{0,1} \\ CV_{0,2} \\ \vdots \\ CV_{0,p} \end{pmatrix} \qquad \text{(Formel 2a)}$$

$X_0$ ist dabei der Ausgangswert für das erfindungsgemäße Verfahren, mit dem die Kalibrierwerte bestimmt werden sollen, wobei die Startwerte $EC_{0,1}$, $EC_{0,2}$, ..... $EC_{0,n}$, $CV_{0,1}$ $CV_{0,2}$ $CV_{0,p}$ Annahmen sind, und ein Vorwärtsmodell nach Formel 3a

$$f\,(X_0,\,h) = \begin{pmatrix} ECa_{0,mod,1}\big(EC_{0,1} \ \dots \ EC_{0,n}\,,h\big) \\ ECa_{0,mod,2}\big(EC_{0,1} \ \dots \ EC_{0,n}\,,h\big) \\ \vdots \\ ECa_{0,mod,p}\big(EC_{0,1} \ \dots \ EC_{0,n}\,,h\big) \end{pmatrix} + \begin{pmatrix} CV_{0,1} \\ CV_{0,2} \\ \vdots \\ CV_{0,p} \end{pmatrix} \qquad \text{(Formel 3a)}$$

mit
$f\,(X_0,\,h)$ = Vorwärtsmodell
$ECa_{mod}\,(h)$ = modellierte scheinbare elektrische Leitfähigkeit der Messhöhen h,
h = Messhöhe,
$CV_{0,1\text{-}p}$ = Kalibrierwert und
$EC_{0,1} \dots EC_{0,n}$ = elektrische Leitfähigkeit der Schichten

$ECa_{0,mod\ 1}...Eca_{0,modp}$ = modellierte scheinbare elektrische Leitfähigkeit
verwendet wird, und der geschätzte Startwert $X_0$ über einen Inversionsansatz iterativ optimiert wird, in dem der Unterschied zwischen modellierten $ECa_{mod}$ und gemessenen Werten minimiert wird.

3. Verfahren nach Anspruch 1 oder 2,
**dadurch gekennzeichnet,**
**dass** ein Vorwärtsmodell verwendet wird, welches auf der vollständigen Lösung der elektromagnetischen Gleichungen beruht.

4. Verfahren nach einem der Ansprüche 1 bis 3
**dadurch gekennzeichnet,**

   **dass** als Vorwärtsmodell ein Vorwärtsmodell für kleine Induktionszahlen, LIN-Modell,
   oder ein full solution Modell, FS-Modell, eingesetzt wird.

5. Verfahren nach Anspruch 4 Alternative 1,
**dadurch gekennzeichnet,**
**dass** eine Näherung nach Formel 4 durchgeführt wird,

$$ECa = \frac{4}{\mu_0 \omega \rho^2} \operatorname{Im}\left(\frac{H_s}{H_p}\right) \qquad \text{(Formel 4)}$$

in der ECa die scheinbaren elektrischen Bodenleitfähigkeiten beschreibt, welche die Leitfähigkeit eines homogenen Bodens ist, $H_P$ die primäre Magnetfeldstärke, $H_S$ die sekundäre Magnetfeldstärke, $\mu_0$ die magnetische Vakuumpermeabilität, $\rho$ der Tx-Rx-Abstand und $\omega$ die Messfrequenz ist.

6. Verfahren nach einem der Ansprüche 1 bis 5,
**dadurch gekennzeichnet,**
**dass** die Kalibrierung für Messungen der elektrischen Leitfähigkeit in Tiefen zwischen 0 m und 50 m durchgeführt wird.

7. Verfahren nach einem der Ansprüche 1 bis 6,
**dadurch gekennzeichnet,**
**dass** die Kalibrierung an einem Ort oder an zwei Orten durchgeführt wird.

**Claims**

1. A method for calibration of electromagnetic induction measurement systems, in which an electrical induction measuring system having at least one transmitter which emits a magnetic field as a primary signal which triggers a current in the soil which generates a secondary signal, and having a receiver which records the magnetic signal, is positioned at least at two measuring heights relative to a soil to be to be measured, wherein an input vector according to formula 1 is created,

$$X = \begin{pmatrix} EC_1 \\ EC_2 \\ \vdots \\ EC_n \\ CV_1 \end{pmatrix} \qquad \text{(Formula 1)}$$

with

   $EC_{1-n}$ = conductivity value of the respective layer and
   $CV_1$ = calibration value of the transmitter-receiver pair
   which represents a combination of soil properties and environmental properties containing the properties of the induction measurement system and includes a data set of n conductivity values of n layers, wherein n denotes the respective layer, and which uses as an initial value for the determination of the calibration values a starting value $X_0$ according to formula 2

$$X_0 = \begin{pmatrix} EC_{0,1} \\ EC_{0,2} \\ \vdots \\ EC_{0,n} \\ CV_{0,1} \end{pmatrix} \qquad \text{(Formula 2)}$$

with
$EC_{0,1}...EC_{0,n}$ = the electrical conductivity for n layers and
$CV_{0,1}$ = calibration value
where $EC_{0,1}$, $EC_{0,2}$, $EC_{0,3}$,...$EC_{0,n}$ and $CV_{0,1}$ are assumptions and apparent electrical conductivities $ECa_{mod}(h)$ are calculated as assumption for m measurement heights h [$h_1$, $h_2$, $h_3$, ....$h_m$] using a forward model, wherein $CV_{0,1}$ is constant for all measurement heights, resulting in a forward model according to formula 3

$$f(X_0, h) = ECa_{0,mod}(EC_{0,1}...EC_{0,n}, h) + CV_{0,1} \qquad \text{(Formula 3)}$$

with $f(X_0,h)$ = function from initial value $X_0$ to height h and
$ECa_{0,mod}$ = modeled $ECa_0$ data
and the estimated starting value $X_0$ is iteratively optimized via an inversion approach in which the difference between modeled $ECa_{mod}$ values and measured values is minimized,
in which, over a total height of two meters, ten measurements at intervals of 20 cm or 20 measurements at a distance of 10 cm are carried out, and an inversion method is used for minimization according to formula 5

$$\min\{f(X, h) - ECa_{mea}(h)\} \qquad \text{(Formula 5)}$$

with
$f(X,h)$ = modeled measured value and
$ECa_{mea}(h)$ = measured data from different measurement heights,
wherein a simplex method or a stochastic method is used to solve the equation according to formula 5.

2. The method for calibration of electromagnetic induction measurement systems, having at least one transmitter which emits a magnetic field as a primary signal which triggers a current in the soil which generates a secondary signal, and at least one receiver which records the magnetic signal and is positioned at least at two measuring heights relative to a soil to be measured, wherein, over a total height of two meters, ten measurements at intervals of 20 cm or 20 measurements at a distance of 10 cm are carried out, and an electromagnetic induction measurement system is used which comprises multiple transmitter-receiver pairs,p, thus at least one transmitter and two receivers or at least two transmitters and one receiver, wherein the input vector according to formula 1a is used

$$X = \begin{pmatrix} EC_1 \\ EC_2 \\ \vdots \\ EC_n \\ CV_1 \\ CV_2 \\ \vdots \\ CV_p \end{pmatrix} \qquad \text{(Formula 1a)}$$

with

$EC_1...EC_n$ = conductivity of the respective layer and

$CV_1...CV_p$ = calibration value of the respective transmitter-receiver pair,

wherein for multiple transmitter-receiver combinations, p, an input vector $X_0$ according to formula 2a is used as starting value,

$$X_0 = \begin{pmatrix} EC_{0,1} \\ EC_{0,2} \\ \vdots \\ EC_{0,n} \\ CV_{0,1} \\ CV_{0,2} \\ \vdots \\ CV_{0,p} \end{pmatrix} \quad \text{(Formula 2a)}$$

$X_0$ is the initial value for the method according to the invention, with which the calibration values are to be determined, wherein the starting values $EC_{0,1}$, $EC_{0,2}$. ... $EC_{0,n}$, $CV_{0,1}$ $CV_{0,2}$ are assumptions, and a forward model according to formula 3a is used

$$\mathrm{f}(X_0, h) = \begin{pmatrix} ECa_{0,mod,1}(EC_{0,1}...EC_{0,n},h) \\ ECa_{0,mod,2}(EC_{0,1}...EC_{0,n},h) \\ \vdots \\ ECa_{0,mod,p}(EC_{0,1}...EC_{0,n},h) \end{pmatrix} + \begin{pmatrix} CV_{0,1} \\ CV_{0,2} \\ \vdots \\ CV_{0,p} \end{pmatrix} \quad \text{(Formula 3a)}$$

with

$f(X_0, h)$ = forward model

$ECa_{mod}(h)$ = modeled apparent electrical conductivity of measurement heights h,

h = measurement height,

$CV_{0,1-p}$ = calibration value and

$EC_{0,1}... EC_{0,n}$ = electrical conductivity of the layers $ECa_{0,mod1}... Eca_{0,modp}$ = modeled apparent electrical conductivity

and the estimated starting value $X_0$ is optimized iteratively via an inversion approach in which the difference between modeled $ECa_{mod}$ and measured values is minimized.

3.  The method according to claim 1 or 2,
    **characterized in**
    **that** a forward model is used which is based on the complete solution of the electromagnetic equations.

4.  The method according to any one of claims 1 to 3,
    **characterized in**
    **that** a forward model for small induction numbers, LIN model, or a full solution model, FS model, is used as the forward model.

5.  The method according to claim 4 alternative 1, **characterized in**
    **that** an approximation according to formula 4 is carried out,

$$ECa = \frac{4}{\mu_0 \omega \rho^2} Im\left(\frac{H_s}{H_p}\right) \quad \text{(Formula 4)}$$

in which ECa describes the apparent electrical soil conductivities, which is the conductivity of a homogeneous soil, $H_p$ is the primary magnetic field strength, $H_s$ is the secondary magnetic field strength, $\mu_0$ is the magnetic vacuum permeability, $\rho$ is the Tx-Rx distance, and $\omega$ is the measurement frequency.

6. The method according to any one of claims 1 to 5,
   **characterized in**
   **that** the calibration for measurements of the electrical conductivity is performed at depths between 0 m and 50 m.

7. The method according to any one of claims 1 to 6,
   **characterized in**
   **that** the calibration is carried out at one location or at two locations.

**Revendications**

1. Procédé d'étalonnage de systèmes électromagnétiques de mesure de l'induction, dans lequel on met en position à au moins deux hauteurs de mesure par rapport à un sol à mesurer, un système électrique de mesure de l'induction comprenant au moins un émetteur, qui émet un champ magnétique comme signal primaire, qui déclenche dans le sol un courant, qui crée un signal secondaire, et un récepteur, qui enregistre le signal secondaire magnétique, dans lequel on établit un vecteur d'entrée de formule 1,

$$X = \begin{pmatrix} EC_1 \\ EC_2 \\ \vdots \\ EC_n \\ CV_1 \end{pmatrix} \quad \text{(formule 1)}$$

avec

$EC_{1-n}$ = valeur de la conductivité de la couche respective et
$CV_1$ = valeur d'étalonnage du couple émetteur - récepteur
qui représente une combinaison de propriétés du sol et de propriétés de l'environnement, qui contient les propriétés du système de mesure de l'induction, et qui comporte un ensemble de données composés de n valeurs de conductivité de n couches, dans lequel n désigne la couche respective, et qui utilise, comme valeur de sortie pour la détermination des valeurs d'étalonnage, une valeur $X_0$ initiale suivant la formule 2

$$X_0 = \begin{pmatrix} EC_{0,1} \\ EC_{0,2} \\ \vdots \\ EC_{0,n} \\ CV_{0,1} \end{pmatrix} \quad \text{(formule 2)}$$

avec
$EC_{0,1}$ ... $EC_{0,n}$ = la conductivité électrique pour n couches et $CV_{0,1}$ = valeur d'étalonnage
dans laquelle $EC_{0,1}$, $EC_{0,2}$, $EC_{0,3}$, ... $EC_{0,n}$ et $CV_{0,1}$ sont des hypothèses et on calcule comme hypothèses des conductivités $ECa_{mod}(h)$ électriques apparentes pour m hauteurs h [$h_1$, $h_2$, $h_3$, ...hm] de mesure au moyen d'un modèle prospectif, dans lequel $CV_{0,1}$ est constant pour toutes les hauteurs de mesure, en en obtenant un modèle prospectif de formule 3

$$f(X_0, h) = ECa_{0,mod}(EC_{0,1}...EC_{0,n}, h) + CV_{0,1} \quad \text{(formule 3)}$$

avec
$f((X_0, h)$ = fonction de la valeur $X_0$ initiale pour la hauteur h et
$ECa_{0,mod}$ = donnée $ECa_0$ modélisée
et on optimise itérativement la valeur $X_0$ initiale estimée par une équation d'inversion, dans laquelle on minimise la différence entre des valeurs $ECa_{mod}$ modélisée et des valeurs mesurées,
dans lequel on effectue, sur une hauteur de deux mètres en tout, dix mesures à la distance de 20 cm ou vingt mesures à la distance de 10 cm, et
on utilise un procédé d'inversion de minimisation suivant la formule 5

$$\min\{f(X,h) - ECa_{mea}(h)\} \qquad (\text{formule 5})$$

avec
f(X,h) = valeur de mesure modélisée et
$ECa_{mea}(h)$ = donnée mesurée de hauteurs de mesure différentes dans lequel on utilise, pour la solution de l'équation de la formule 5, un procédé simplexe ou un procédé stochastique.

2. Procédé d'étalonnage de systèmes électromagnétiques d'induction comprenant au moins un émetteur, qui émet un champ magnétique comme signal primaire, qui déclenche dans le sol un courant, qui crée un signal secondaire, et au moins un récepteur, qui enregistre le signal secondaire magnétique que l'on met en position à au moins deux hauteurs de mesure par rapport à un sol à mesurer,

dans lequel on effectue, sur une hauteur de deux mètres en tout, dix mesures à la distance de 20 cm ou vingt mesures à la distance de 10 cm, et on utilise un système électromagnétique de mesure de l'induction, qui possède plusieurs couples, p, d'émetteur-récepteur, donc au moins un émetteur et deux récepteurs ou au moins deux émetteurs et un récepteur, dans lequel on utilise le vecteur d'entrée de formule 1a

$$X = \begin{pmatrix} EC_1 \\ EC_2 \\ \vdots \\ EC_n \\ CV_1 \\ CV_2 \\ \vdots \\ CV_p \end{pmatrix} \qquad (\text{formule 1a})$$

avec
$EC_1 \dots EC_n$ = conductivité de la couche respective et
$CV_1 \dots CV_p$ = valeur d'étalonnage du couple respectif d'émetteur-récepteur
dans lequel on utilise, pour plusieurs combinaisons, p, d'émetteur-récepteur comme valeur initiale, un vecteur $X_0$ d'entrée de formule 2a

$$X_0 = \begin{pmatrix} EC_{0,1} \\ EC_{0,2} \\ \vdots \\ EC_{0,n} \\ CV_{0,1} \\ CV_{0,2} \\ \vdots \\ CV_{0,p} \end{pmatrix} \qquad (\text{formule 2a})$$

$X_0$ étant la valeur initiale pour le procédé suivant l'invention, par laquelle les valeurs d'étalonnage doivent être déterminées, dans lequel les valeurs initiales $EC_{0,1}$, $EC_{0,2}$, ... $EC_{0,n}$, $CV_{0,1}$, $CV_{0,2}$ ...$CV_{0,p}$ sont des hypothèses et on utilise un modèle prospectif suivant la formule 3a

$$f(X_0, h) = \begin{pmatrix} ECa_{0,mod,1}(EC_{0,1} \dots EC_{0,n}, h) \\ ECa_{0,mod,2}(EC_{0,1} \dots EC_{0,n}, h) \\ \vdots \\ ECa_{0,mod,p}(EC_{0,1} \dots EC_{0,n}, h) \end{pmatrix} + \begin{pmatrix} CV_{0,1} \\ CV_{0,2} \\ \vdots \\ CV_{0,p} \end{pmatrix} \qquad \text{(formule 3a)}$$

avec

$f(X_0, h)$ = modèle prospectif

$ECa_{mod}$ (h) = conductivité électrique apparente modélisée des hauteurs h de mesure,

h = hauteur de mesure,

$CV_{0,1-p}$ = valeur d'étalonnage et

$EC_{0,1} \dots EC_{0,n}$ = conductivité électrique des couches

$ECa_{0,mod1} \dots Eca_{0,modp}$ = conductivité électrique apparente modélisée et on optimise itérativement la valeur $X_0$ initiale estimée par une équation d'inversion, dans laquelle on minimise la différence entre des valeurs $ECa_{mod}$ modélisées et mesurées.

3. Procédé suivant la revendication 1 ou 2,
**caractérisé en ce que**
l'on utilise un modèle prospectif, qui repose sur la solution complète des équations électromagnétiques.

4. Procédé suivant l'une des revendications 1 à 3,
**caractérisé en ce que**
l'on utilise, comme modèle prospectif, un modèle prospectif pour des petits nombres d'inductions, modèle LIN, ou un modèle à solution complète, modèle FS.

5. Procédé suivant la revendication 4 branche 1 de l'alternative,
**caractérisé en ce que**
l'on effectue une approximation suivant la formule 4

$$ECa = \frac{4}{\mu_0 \omega \rho^2} \operatorname{Im}\left(\frac{H_s}{H_p}\right) \qquad \text{(formule 4)}$$

dans laquelle ECa décrit les conductivités électriques apparentes du sol, qui est la conductivité d'un sol homogène, $H_p$ les intensités primaires du champ magnétique, $H_s$, les intensités secondaires du champ magnétiques, $\mu_0$, la perméabilité magnétique dans le vide, p, la distance Tx-Rx et $\omega$ la fréquence de mesure.

6. Procédé suivant la revendication 1 à 5,
**caractérisé en ce que**
l'on effectue l'étalonnage pour des mesures des conductivités électriques à des profondeurs comprises entre 0 m et 50 m.

7. Procédé suivant la revendication 1 à 6,
**caractérisé en ce que**
l'on effectue l'étalonnage en un lieu ou en deux lieux.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003184301 A1
- CA 2424250 A1
- US 6710599 B2
- CA 2424250 C
- US 7759941 B2

**In der Beschreibung aufgeführte Nicht-Patentliteratur**

- **LAVOUE, F. ; J. VAN DER KRUK ; J.RINGS ; F. ANDRE ; D. MOGHADAS ; J.HUISMAN ; S. LAMBOT ; L. WEIHERMÜLLER ; J. VAN DER BORGHT ; H. HEREECKEN.** Electromagnetic induction calibration using apparent electrical conductivity modelling based on electrical resistivity tomography. *Near Surf. Geophys.,* 2010, vol. 8 (6), 553-561
- **SASAKI et al.** Resistivity and offset error estimations for the smallloop electromagnetic method. *Geophysics,* 2008, vol. 73 (3), F91-F95
- **MINSLEY et al.** Multielevation calibration of frequency-domain electromagnetic data. *Geophysics,* 2014, vol. 79 (5), E201-E216
- **MCNEILL, J.D.** *Electroagnetic terrain conductivity measurement at low induction numbers,* 1980
- Electromagnetic Theory for Geophysical Applications. **WARD ; HOMANN.** Electromagnetic Methods in Applied Geophysics - Theory, investigations in Geophysics. Society of Exploration Geophysicists, 1988
- **HENDRICKX ; J. M. H. B. BORCHERS ; D. L. CORWIN ; S. M. LESCH ; A. C. HILGENDORF ; J. SCHLUE.** Inversion of soil conductivity profiles from electromagnetic induction measurements: Theory and experimental verification. *Soil Sci. Soc. Am. J.,* 2002, vol. 66 (3), 673-685